# EUROPÄISCHE PATENTSCHRIFT

(11) **EP 1 980 804 B1**
(45) Veröffentlichungstag und Bekanntmachung des Hinweises auf die Patenterteilung: **19.10.2011**
(21) Anmeldenummer: 08102719.5
(22) Anmeldetag: 18.03.2008
(51) Int. Cl.: F25B 25/00

(54) **Verfahren zur Bereitstellung von thermischer Energie**
Method for generating thermal energy
Procédé de préparation d'énergie thermique

(30) Priorität: 12.04.2007 AT 5662007
(43) Veröffentlichungstag der Anmeldung: 15.10.2008
(73) Patentinhaber: "Schilling" Treuhand GmbH, 1030 Wien (AT)
(72) Erfinder: Kirnich Walter, 1210 Wien (AT)
(74) Vertreter: Babeluk, Michael

(56) Entgegenhaltungen:
- EP-A- 1 632 724
- DE-A1- 3 101 138
- DE-A1- 3 736 676
- DE-U1-202005 014 597

## Beschreibung

Die vorliegende Erfindung betrifft ein Verfahren gemäß dem Oberbegriff von Patentanspruch 1.

Aus der US 6,735,969 A ist es bekannt, einen Gasmotor zum Antrieb einer Wärmepumpe zu nutzen, wobei gleichzeitig die am Gasmotor selbst anfallende Wärme mitgenutzt wird. Damit ist es zwar möglich, die bereitgestellte Wärmemenge deutlich über die Wärmemenge zu steigern, die dem Brennwert des eingesetzten Kraftstoffes entspricht, die Effizienz des Systems ist jedoch im Vergleich zum notwendigen Aufwand unbefriedigend. Insbesondere sind die Regelungsmöglichkeiten einer solchen Anlage beschränkt.

Weiters zeigt die CN 1 869 553 A ein System mit Gasmotor, Wärmepumpe und Solarabsorber, bei der die im Solarabsorber erzeugte Wärme einerseits in den Verdampferkreislauf der Wärme eingespeist oder andererseits zu den Verbrauchern geleitet werden kann. Dabei ist in einem Wärmetauscher eine Parallelschaltung des Wärmepumpenkreislaufes und des Solarkreislaufes gegeben.

Schließlich beschreibt die EP 1 632 724 A ein Verfahren der eingangs erwähnten Art, bei dem eine Wärmepumpe durch einen Gasmotor angetrieben wird, und bei dem die von der Wärmepumpe erzeugte Wärme gemeinsam mit der Abwärme des Gasmotors für Verbraucher zur Verfügung gestellt wird, wobei der Verdampferkreislauf der Wärmepumpe mit Wärme aus einem Solarabsorber versorgt wird.

Es ist eine Aufgabe der Erfindung, die Möglichkeit zu schaffen, dass auch dann ein sinnvoller Betrieb möglich ist, wenn der Solarabsorber unter Umgebungstemperatur abgekühlt wird. Es ist zum Beispiel im Rahmen der Erfindung möglich, den Solarabsorber als Eislaufplatz auszubilden, d.h., dass diesem Bauteil soviel Wärme entzogen wird, dass eine Eisfläche aufgebaut werden kann. In einem Sommerbetrieb muss andererseits die im Solarabsorber bei vergleichsweise hohen Temperaturen anfallende Wärme optimal genützt werden. Neben diesen Betriebszuständen gibt es aber auch Betriebszustände, bei denen die Sonneneinstrahlung vorhanden, aber schwach ist oder bei denen bei gegebener Sonneneinstrahlung aber sehr niedrigen Außentemperaturen im Solarabsorber nicht ausreichend hohe Temperaturen erreicht werden können, um die Verbraucher direkt anzuspeisen. Bei der aus dem oben genannten Dokument bekannten Lösung ist es in einem solchen Betriebszustand erforderlich, die gesamte Wärmemenge des Solarabsorbers über den Wärmepumpenkreislauf zu führen.

Eine weitere Aufgabe der vorliegenden Erfindung ist es, ein Verfahren der oben beschriebenen Art so weiterzubilden, dass der Kraftstoffverbrauch wesentlich eingeschränkt werden kann, wobei eine möglichst weitgehende Regelung erreichbar sein soll. Eine besondere Aufgabe der vorliegenden Erfindung ist es, ein Verfahren anzugeben, das verschiedene Anforderungen, wie Bereitstellung von Heizungswärme, Warmwassererwärmung und Erwärmung eines Schwimmbades, in optimaler Weise kombiniert. Eine weitere Aufgabe der vorliegenden Erfindung ist es, eine Vorrichtung zur Durchführung eines solchen Verfahrens anzugeben.

Erfindungsgemäß werden diese Aufgaben durch die Merkmale von Patentanspruch 1 gelöst. Wesentlich an der vorliegenden Erfindung ist, dass der Solarabsorber nicht bzw. nicht nur parallel zur Wärmepumpe eingesetzt wird, sondern dass es mit dem erfindungsgemäßen Verfahren auch möglich ist, das Temperaturniveau der am Solarabsorber bereitgestellten Wärme entsprechend anzuheben, um eine optimale Anspeisung der verschiedenen Verbrauchergruppen zu erzielen. Dabei ermöglicht es die erfindungsgemäße Lösung insbesondere, einen Teil der Wärmemenge aus dem Solarabsorber über den Wärmepumpenkreislauf zu führen, gleichzeitig jedoch über den Wärmetauscher einen Teil der Wärme direkt an die eigentlichen Verbraucher abzugeben. Auf diese Weise kann der Wirkungsgrad weiter erhöht werden.

Im gegebenen Zusammenhang ist mit Solarabsorber ein Solarabsorber gemeint, der im Wesentlichen als frei liegendes Schlauchsystem ausgebildet ist. Im Gegensatz dazu besitzen Hochleistungsabsorber eine Abdeckung aus Glas, was es ermöglicht, bei Sonneneinstrahlung den Wirkungsgrad zu erhöhen, da die thermische Abstrahlung vermindert wird. Bei den Solarabsorbern der vorliegenden Erfindung wird dieser Nachteil bewusst in Kauf genommen, da auf diese Weise ein wesentlich verbesserter Wärmeübergang erzielt wird, wenn keine oder nur geringe Sonneneinstrahlung vorliegt. Darüber hinaus ist es in in einfacher Weise möglich, die Solarabsorber begehbar auszugestalten und als Nutzfläche wie etwa als Eislaufplatz zu verwenden.

Besonders günstig ist es, wenn das vom Solarabsorber erwärmte Medium in einem ersten Bypasssystem in Abhängigkeit vom Temperaturniveau des Solarkreises zum Kondensator der Wärmepumpe geführt wird. Auf diese Weise kann man erreichen, dass bei entsprechendem Wärmeangebot am Solarabsorber dieser mit den entsprechenden Verbrauchern verbindbar ist. Dabei kann das Wärmeträgermedium entweder direkt zu den Verbrauchern oder über den Kondensator der Wärmepumpe zu einer zusätzlichen Nacherwärmung geführt werden. Wenn in diesem Zusammenhang davon die Rede ist, dass das vom Solarabsorber erwärmte Medium zu einem bestimmten Punkt geführt wird, so soll dies auch den Fall einschließen, dass ein Wärmetauscher zwischengeschaltet ist. Dies gilt auch für analoge Formulierungen in der Folge.

Von besonderem Vorteil ist es, wenn die Abwärme des Gasmotors und die Wärme am Kondensator der Wärmepumpe unterschiedlichen Verbrauchgruppen zugeführt wird. Auf diese Weise können unterschiedliche Temperaturniveaus in optimaler Weise ausgenützt werden und es wird die Regelung der Anlage wesentlich vereinfacht. Insbesondere ist es in diesem Zusammenhang günstig, wenn die Abwärme des Gasmotors einem Heizungs- und Warmwasserbereitungssystem zugeführt wird, während die am Kondensator anfallende Wärme einem Schwimmbad zugeführt wird. Die Verluste können auf diese Weise verringert werden, da das Temperaturniveau am Gasmotor in der Regel höher ist als das an der Wärmepumpe, zumindest dann, wenn man versucht, diese in einem energetisch günstigen Betriebszustand zu betreiben.

Von besonderem Vorteil ist es, wenn die Abwärme des Gasmotors und die Wärme am Kondensator der Wärmepumpe unterschiedlichen Verbrauchgruppen zugeführt wird. Auf diese Weise können unterschiedliche Temperaturniveaus in optimaler Weise ausgenützt werden und es wird die Regelung der Anlage wesentlich vereinfacht. Insbesondere ist es in diesem Zusammenhang günstig, wenn die Abwärme des Gasmotors einem Heizungs- und Warmwasserbereitungssystem zugeführt wird, während die am Kondensator anfallende Wärme einem Schwimmbad zugeführt wird. Die Verluste können auf diese Weise verringert werden, da das Temperaturniveau am Gasmotor in der Regel höher ist als das an der Wärmepumpe, zumindest dann, wenn man versucht, diese in einem energetisch günstigen Betriebszustand zu betreiben.

Eine besonders breite Variationsmöglichkeit der Anwendungen ist gegeben, wenn der Solarabsorber durch den Verdampfer der Wärmepumpe so weit abgekühlt wird, dass er als Eislaufplatz nutzbar ist. Auf diese Weise kann im Winterbetrieb einerseits die Bereitstellung eines Eislaufplatzes und andererseits die Erwärmung eines Hallenbades mit minimalem Energieeinsatz durchgeführt werden.

Weiters betrifft die vorliegende Erfindung eine Vorrichtung zur Bereitstellung von thermischer Energie mit einem Gasmotor, der eine Wärmepumpe antreibt, und mit Einrichtungen zur Übertragung der vom Gasmotor erzeugten Wärme und der am Verdampfer der Wärmepumpe anfallenden Wärme zu Verbrauchern. Ein optimaler Energieeinsatz wird in diesem Zusammenhang dadurch erreicht, dass ein Solarabsorber vorgesehen ist, der mit dem Verdampferkreislauf der Wärmepumpe in Verbindung steht.

Die am Solarabsorber anfallende Energie kann je nach Sonneneinstrahlung optimal dadurch eingesetzt werden, dass ein Bypasssystem den Solarabsorber mit dem Kondensator der Wärmepumpe verbindet.

Die am Gasmotor anfallende thermische Energie kann in besonders vorteilhafter Weise dadurch genutzt werden, dass ein Abgasbypassventil vorgesehen ist, das das Temperaturniveau eines Abgaskreislaufs des Gasmotors regelt. In analoger Weise ist es ebenfalls günstig, wenn ein Kühlkreislaufbypassventil vorgesehen ist, das das Temperaturniveau des Kühlkreislaufes des Gasmotors regelt. Damit kann nicht nur der Gasmotor selbst unter optimalen thermischen Bedingungen betrieben werden, es kann auch das Temperaturniveau in besonders günstiger Weise an die von den Verbrauchern benötigten Wärmeniveaus angepasst werden.

Durch Ankoppelung eines Generators kann zusätzlich elektrische Energie erzeugt werden, was die Einsatzmöglichkeiten der erfindungsgemäßen Lösung entsprechend vergrößert.

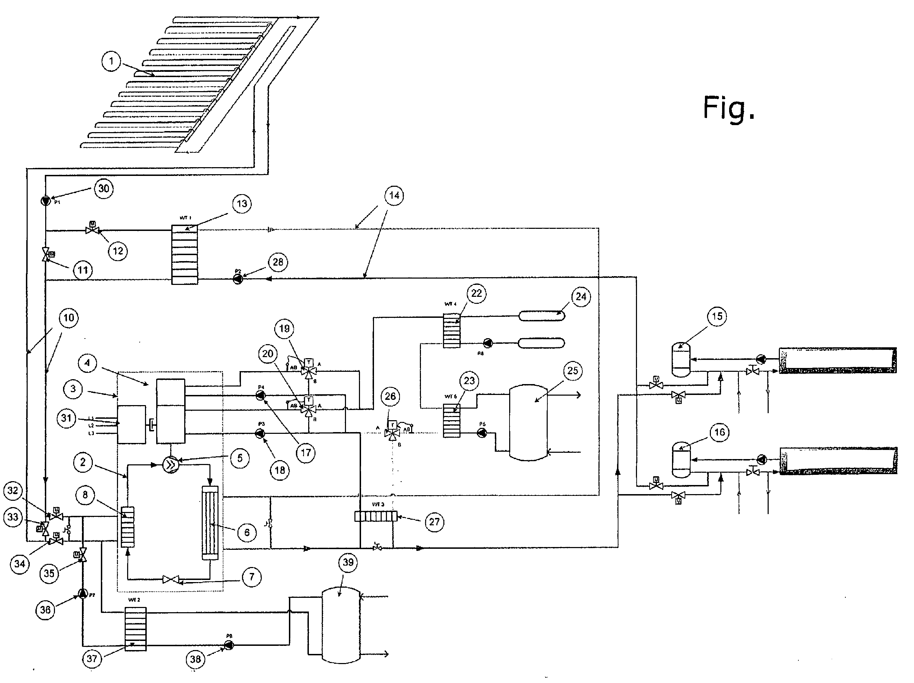

In der Folge wird die vorliegende Erfindung anhand des in der Figur dargestellten Ausführungsbeispiels näher erläutert.

Die Figur zeigt ein Schaltungsdiagramm einer erfindungsgemäß ausgebildeten Anlage.

Die Anlage besteht aus einem Solarabsorber 1, der über ein erstes Leitungssystem 10 mit einer Wärmepumpeneinheit verbunden ist, die insgesamt mit 3 bezeichnet ist. Die Wärmepumpeneinheit 3 besteht aus der eigentlichen Wärmepumpe 2 und einem Gasmotor 4, der den Kompressor 5 der Wärmepumpe 2 antreibt. Der Kreislauf der Wärmepumpe 2 besteht weiters aus einem Kondensator 6, einem Expansionsventil 7 und einem Verdampfer 8. Der Verdampfer 8 steht mit dem ersten Leitungssystem 10, das zum Solarabsorber 1 führt, in Verbindung. Eine Pumpe 30 dient dazu, das Medium im Solarkreislauf zu fördern.

Über Regelventile 11, 12 kann der Solarabsorber wahlweise mit einem ersten Wärmetauscher 13 in Verbindung gebracht werden, der Teil eines ersten Bypasssystems ist, das allgemein mit 14 bezeichnet ist. Dieses Bypasssystem steht zunächst mit dem Kondensator 6 der Wärmepumpe 2 in Verbindung und führt in weiterer Folge zur Verbrauchern, nämlich einem Freibad 15 und einem Hallenbad 16. Der Gasmotor 4 ist in der Figur schematisch in einen Abgasteil 4a und einen Kühlkreislaufteil 4b unterteilt. Dies bedeutet, dass einerseits Wärme aus dem Kühlkreislauf 4b und andererseits aus dem Abgassystem 4a des Gasmotors 4 gewonnen wird. Die Wärme aus diesen Systemen wird über Pumpen 17, 18 und Mischventile abgeführt, die als Abgasventil 19 und als Kühlkreislaufbypassventil 20 ausgebildet sind. Die Wärme wird über einen vierten Wärmetauscher 22 und einen fünften Wärmetauscher 23 zu einem schematisch angedeuteten Heizsystem 24 und einem Warmwasserbereitungssystem 25 zugeführt. Über ein weiteres Mischventil 26 und einen dritten Wärmetauscher 27 kann je nach Temperaturniveau Wärme zwischen dem System zur Erwärmung des Freibades 15 und des Hallenbades 16 und dem Systems zur Heizung und Warmwasserbereitung transferiert werden. Eine weitere Pumpe 28 dient zur Förderung des Mediums im Bypasssystems 14.

An den Gasmotor 4 ist weiters ein Generator 31 zur Erzeugung elektrischer Energie angeschlossen. Über entsprechende Kupplungen, bzw. Steuerungen wird eine flexible Beschaltung erreicht, so dass der Gasmotor entweder nur zur Erzeugung von elektrischer Energie über den Generator 31 oder nur zum Betreiben des Kompressors 5 oder gleichzeitig für beide Zwecke eingesetzt werden kann.

Die vorliegende Erfindung ist auch zur Kälteproduktion ausgelegt. Dazu wird über Ventile 32, 33, 34, 35 der Solarabsorberkreis abgekoppelt und durch die Pumpe 36 wird ein Wärmetauscher angespeist, der über eine Pumpe 37 einen Kältespeicher 39 versorgt.

In der Folge wird der Betrieb der erfindungsgemäßen Vorrichtung näher erläutert.

Bei geringem Solarertrag wird durch entsprechende Einstellung der Ventile 11, 12 der Solarabsorber 1 hauptsächlich mit dem Verdampfer der Wärmepumpe 2 verbunden. Auf diese Weise kann bei entsprechendem Einbau des Solarabsorbers auch ein gewisser Anteil Erdwärme gewonnen werden, da das Temperaturniveau des Solarabsorbers 1 entsprechend abgesenkt wird. In der Wärmepumpe 2 wird die so aufgenommene Wärme auf ein höheres Temperaturniveau gebracht und vom Kondensator 6 primär zum Freibad 15, bzw. zum Hallenbad 16 geführt. Der Rücklauf von den Bädern 15, 16 wird über den ersten Wärmetauscher 13 geführt, wo jedoch keine Temperaturveränderung stattfindet, da dieser Wärmetauscher 13 vom Solarmedium nicht durchströmt ist. Der Gasmotor 4 wird neben dem Antrieb der Wärmepumpe 2 dazu genutzt, Wärme abzugeben, die zur Bereitstellung von Heizungswärme und Warmwasser dient. Wenn nun der Bedarf an Wärme in den Schwimmbädern 15, 16 größer ist als durch die Wärmepumpe 2 zur Verfügung gestellt werden kann, und andererseits der Wärmebedarf für Heizung Warmwasser nicht übermäßig groß ist, so kann über den dritten Wärmetauscher 27 zusätzlich Wärme von dem Gasmotor 4 zur Schwimmbadbeheizung abgezweigt werden, was über das Mischventil 26 gesteuert werden kann. Umgekehrt kann es bei geringem Bedarf an Wärme für die Schwimmbäder 15, 16 auf zu einer Rückführung von Wärme von der Wärmepumpe 2 in das Heizungs- und Warmwassersystem kommen. Durch entsprechende Temperaturfühler, die in der Figur nicht dargestellt sind, kann gemeinsam mit einer ebenfalls nicht dargestellten Regelung ein optimaler Betrieb der Anlage gewährleistet werden.

Sobald am Solarabsorber 1 ein ausreichend hohes Temperaturniveau erzielbar ist, kann ein Teil der anfallenden Wärme über den ersten Wärmetauscher 13 abgeführt und direkt zum Kondensator 6 der Wärmepumpe 2 geführt werden. Auf diese Weise wird die Wärmepumpe 2 entlastet und der Energieverbrauch verringert.

Durch entsprechenden Betrieb im Winter kann das Temperaturniveau am Solarabsorber 1 durch den Verdampfer 8 der Wärmepumpe 2 so weit abgesenkt werden, dass Eisbildung auftritt, wodurch die Einrichtung von Eislaufplätzen möglich ist.

Die vorliegende Erfindung ermöglicht es, eine optimale Nutzung von Primärenergie gemeinsam mit der Nutzung von Solarenergie sicherzustellen. Dabei kann ein besonders breites Spektrum an Anforderungen abgedeckt werden.

## Patentansprüche

1. Verfahren zur Bereitstellung von thermischer Energie, bei dem einer Wärmepumpe (2) durch einen Gasmotor (4) angetrieben wird, und bei dem die von der Wärmepumpe (2) erzeugte Wärme gemeinsam mit der Abwärme des Gasmotors (4) für Verbraucher (15, 16; 24, 25) zur Verfügung gestellt wird, wobei der Verdampferkreislauf der Wärmepumpe (2) mit Wärme aus einem Solarabsorber (1) versorgt wird, **dadurch gekennzeichnet, dass** ein im Kondensator (6) der Wärmepumpe (2) erwärmtes Wärmeträgermedium zunächst den Verbrauchern (15, 16) zugeführt wird und stromabwärts der Verbraucher (15, 16) durch einen ersten Wärmetauscher (13) geführt wird, der Teil eines ersten Bypasssystems (14) ist, das mit dem Solarabsorber (1) in Verbindung steht.

2. Verfahren nach Anspruch 1, **dadurch gekennzeichnet, dass** das vom Solarabsorber (1) erwärmte Medium in einem ersten Bypasssystem (14) in Abhängigkeit vom Temperaturniveau des Solarkreises zum Kondensator (6) der Wärmepumpe (2) oder zu den Verbrauchern geführt wird.

3. Verfahren nach Anspruch 1 oder 2, **dadurch gekennzeichnet, dass** die Abwärme des Gasmotors (4) und die Wärme am Kondensator (6) der Wärmepumpe (2) unterschiedlichen Verbrauchergruppen (15, 16; 24, 25) zugeführt wird, wobei vorzugsweise die Abwärme des Gasmotors (4) einem Heizungs- und Warmwasserbereitungssystem (24, 25) zugeführt wird, während die am Kondensator (6) anfallende Wärme einem Schwimmbad (15, 16) zugeführt wird.

4. Verfahren nach einem der Ansprüche 1 bis 3, **dadurch gekennzeichnet, dass** der Solarabsorber (1) durch den Verdampfer (8) der Wärmepumpe (2) so weit abgekühlt wird, dass er als Eislaufplatz nutzbar ist.

5. Vorrichtung zur Bereitstellung von thermischer Energie mit einem Gasmotor (4), der eine Wärmepumpe (2) antreibt und mit Einrichtungen zur Übertragung der vom Gasmotor (4) erzeugten Wärme und der am Verdampfer (8) der Wärmepumpe (2) anfallenden Wärme zu Verbrauchern, wobei ein Solarabsorber (1) vorgesehen ist, der mit dem Verdampferkreislauf der Wärmepumpe (2) in Verbindung steht, **dadurch gekennzeichnet, dass** in einem Bypasssystem der Solarabsorber (1) über einen ersten Wärmetauscher (13) mit dem Kondensator (6) der Wärmepumpe (2) verbunden ist und dass der erste Wärmetauscher (13) stromabwärts der Verbraucher (15, 16) vorgesehen ist.

6. Vorrichtung nach Anspruch 5, **dadurch gekennzeichnet, dass** ein Abgasbypassventil (19) vorgesehen ist, das das Temperaturniveau eines Abgaskreislaufs des Gasmotors (4) regelt.

7. Vorrichtung nach einem der Ansprüche 5 oder 6, **dadurch gekennzeichnet, dass** ein Kühlkreislaufbypassventil (20) vorgesehen ist, das das Temperaturniveau des Kühlkreislaufes des Gasmotors (4) regelt.

8. Vorrichtung nach einem der Ansprüche 5 bis 7, **dadurch gekennzeichnet, dass** zwei Verbrauchgruppen (15, 16; 24, 25) vorgesehen sind, die einerseits mit dem Gasmotor (4) und andererseits mit dem Verdampfer (8) der Wärmepumpe (2) in Verbindung stehen, und dass vorzugsweise ein dritter Wärmetauscher (27) zur Übertragung von Wärme zwischen den Verbrauchergruppen (15, 16; 24, 25) vorgesehen ist.

9. Vorrichtung nach Anspruch 8, **dadurch gekennzeichnet, dass** als erste Verbrauchergruppe ein Raumheizungs- und Warmwasserbereitungssystem (24, 25) und als zweite Verbrauchergruppe ein Schwimmbad (15, 16) oder ein Eislaufplatz vorgesehen ist.

10. Vorrichtung nach einem der Ansprüche 5 bis 9, **dadurch gekennzeichnet, dass** an den Gasmotor (4) ein Generator (31) zur Erzeugung elektrischer Energie angekoppelt ist.

## Claims

1. A method for providing thermal energy, in which a heat pump (2) is driven by a gas motor (4) and in which the heat generated by the heat pump (2) is provided to consumers (15, 16; 24, 25) together with the waste heat of the gas motor (4), with the evaporator circuit of the heat pump (2) being supplied with heat from a solar absorber (1), **characterised in that** a heat carrier medium heated in the condenser (6) of the heat pump (2) is supplied at first to the consumers (15, 16) and is guided downstream of the consumers (15, 16) through a first heat exchanger (13) which is part of a first bypass system (14) which is in connection with the solar absorber (1).

2. A method according to claim 1, **characterised in that** the medium heated by the solar absorber (1) is guided in a first bypass system (14) to the condenser (6) of the heat pump (2) or to the consumers depending on the temperature level of the solar circuit.

3. A method according to claim 1 or 2, **characterised in that** the waste heat of the gas motor (4) and the heat at the condenser (6) of the heat pump (2) is supplied to different consumer groups (15, 16; 24, 25), with preferably the waste heat of the gas motor (4) being supplied to a heating and hot-water processing system (24, 25), whereas the heat obtained in the condenser (6) is supplied to a swimming pool (15, 16).

4. A method according to one of the claims 1 to 3, **characterised in that** the solar absorber (1) is cooled by the evaporator (8) of the heat pump (2) to such an extent that it can be used as an ice-skating rink.

5. An apparatus for providing thermal energy, comprising a gas motor (4) which drives a heat pump (2) and devices for transferring the heat generated by the gas motor (4) and the heat obtained at the evaporator (8) of the heat pump (2) to consumers, with a solar absorber (1) being provided which is in connection with the evaporator circuit of the heat pump (2), **characterised in that** in a bypass system the solar absorber (1) is connected with the condenser (6) of the heat pump (2) via a first heat exchanger (13), and the first heat exchanger (13) is provided downstream of the consumers (15, 16).

6. An apparatus according to claim 5, **characterised in that** an exhaust-gas bypass valve (19) is provided which controls the temperature level of an exhaust-gas circuit of the gas motor (4).

7. An apparatus according to one of the claims 5 or 6, **characterised in that** a cooling-circuit bypass valve (20) is provided which controls the temperature level of the cooling circuit of the gas motor (4).

8. An apparatus according to one of the claims 5 to 7, **characterised in that** two consumer groups (15, 16; 24, 25) are provided which are in connection with the gas motor (4) on the one hand and with the evaporator (8) of the heat pump (2) on the other hand, and preferably a third heat exchanger (27) is provided for transferring heat between the consumers (15, 16; 24, 25).

9. An apparatus according to claim 8, **characterised in that** a room-heating and hot-water processing system (24, 25) is provided as the first group of consumers and a swimming pool (15, 16) or an ice-skating rink as a second group of consumers.

10. An apparatus according to one of the claims 5 to 9, **characterised in that** a generator (31) for generating electric power is coupled with the gas motor (4).

## Revendications

1. Procédé de préparation d'énergie thermique selon lequel,
- on entraîne une pompe à chaleur (2) par un moteur à gaz (4), et
- on alimente en commun l'utilisateur (15, 16 ; 24, 25) avec l'énergie thermique fournie par la pompe à chaleur (2) et la chaleur dégagée par le moteur à gaz (4),
* le circuit de l'évaporateur de la pompe à chaleur (2) étant alimenté en chaleur par un récepteur solaire (1),
procédé **caractérisé en ce qu'**
un fluide caloporteur chauffé dans le condenseur (6) de la pompe à chaleur (2) est tout d'abord fourni aux utilisateurs (15, 16) et en aval des utilisateurs (15, 16), le fluide traverse un premier échangeur de chaleur (13) qui fait partie d'un premier système de dérivation (14) relié au récepteur solaire (1).

2. Procédé selon la revendication 1,
**caractérisé en ce que**
en fonction du niveau de température du circuit solaire le fluide chauffé par le récepteur solaire (1) est conduit dans un premier système de dérivation (14) vers le condenseur (6) de la pompe à chaleur (2) ou vers les utilisateurs.

3. Procédé selon la revendication 1 ou 2,
**caractérisé en ce que**
la chaleur dégagée par le moteur à gaz (4) et la chaleur dégagée par le condenseur (6) de la pompe à chaleur (2) sont fournies à différents groupes d'utilisateurs (15, 16 ; 24, 25),
* de préférence, la chaleur dégagée par le moteur à gaz (4) est fournie à un système de chauffage et de préparation d'eau chaude sanitaire (24, 25) alors que la chaleur fournie par le condenseur (6) alimente une piscine (15, 16).

4. Procédé selon l'une des revendications 1 à 3,
**caractérisé en ce que**
le récepteur solaire (1) est refroidi par l'évaporateur (8) de la pompe à chaleur (2) pour servir de patinoire.

5. Dispositif d'alimentation en énergie thermique comportant un moteur à gaz (4) entraînant une pompe à chaleur (2) et des installations pour transférer la chaleur dégagée par le moteur à gaz (4) et la chaleur dégagée par l'évaporateur (8) de la pompe à chaleur (2) à des utilisateurs,
* un récepteur solaire (1) étant relié au circuit de l'évaporateur de la pompe à chaleur (2),
dispositif **caractérisé en ce que**
- le récepteur solaire (1) est dans un système de dérivation relié au condenseur (6) de la pompe à chaleur (2) par l'intermédiaire d'un premier échangeur de chaleur (13), et
- le premier échangeur de chaleur (13) est en aval des utilisateurs (15, 16).

6. Dispositif selon la revendication 5,
**caractérisé par**
une vanne de dérivation des gaz d'échappement (19) qui régule le niveau de température du circuit des gaz d'échappement du moteur à gaz (4).

7. Dispositif selon l'une des revendications 5 ou 6,
**caractérisé par**
une vanne de dérivation de circuit de refroidissement (20) qui régule le niveau de température du circuit de refroidissement du moteur à gaz (4).

8. Dispositif selon l'une des revendications 5 à 7,
**caractérisé par**
- deux groupes d'utilisateurs (15, 16 ; 24, 25) reliés d'une part au moteur à gaz (4) et d'autre part à l'évaporateur (8) de la pompe à chaleur (2), et
- de préférence un troisième échangeur de chaleur (27) assure la transmission de la chaleur entre les groupes d'utilisateurs (15, 16 ; 24,25).

9. Dispositif selon la revendication 8,
**caractérisé en ce que**
le premier groupe d'utilisateurs est constitué par un système de chauffage de locaux et de préparation d'eau chaude sanitaire (24, 25) et le second groupe d'utilisateurs est une piscine (15, 16) ou une patinoire.

10. Dispositif selon l'une des revendications 5 à 9,
**caractérisé en ce qu'**
un générateur (31) est couplé sur le moteur à gaz (4) pour générer de l'énergie électrique.
